# EUROPEAN PATENT SPECIFICATION

(11) **EP 0 877 557 B1**
(45) Date of publication and mention of the grant of the patent: **11.09.2002**
(21) Application number: 97950051.9
(22) Date of filing: 30.10.1997
(51) Int. Cl.: A23G 3/20, A23G 3/28, A23G 3/00, A23G 1/00

(54) **A METHOD FOR MANUFACTURING A GARNISHED FOOD PRODUCT AND A GARNISHED FOOD PRODUCT PRODUCED BY THIS METHOD**
VERFAHREN ZUR HERSTELLUNG VON GARNIERTEN LEBENSMITTELN UND LEBENSMITTEL HERGESTELLT MIT DIESEM VERFAHREN
PRODUIT ALIMENTAIRE FOURRE ET SON PROCEDE DE FABRICATION

(30) Priority: 01.11.1996 CH 269296
(43) Date of publication of application: 18.11.1998
(73) Proprietor: SOREMARTEC S.A., 6700 Arlon-Schoppach (BE); Ferrero S.p.A., 12051 Alba (Cuneo) (IT); FERRERO OFFENE HANDELSGESELLSCHAFT m.b.H., D-6000 Frankfurt am Main (DE)
(72) Inventor: PEDROTTO, Gianfranco, I-12050 Neviglie (CUNEO) (IT)
(74) Representative: Rambelli, Paolo
(86) International application number: EP9706003
(87) International publication number: WO98019557

(56) References cited:
- EP-A- 0 498 357
- EP-A- 0 630 574
- EP-A- 0 680 701
- EP-A- 0 712 579
- DE-A- 2 002 963
- GB-A- 2 196 828

## Description

The present invention concerns a method for manufacturing a garnished food product, and a garnished food product produced by this method.

The present invention has been developed with particular attention to its possible use for applying a garnish constituted by a rosette of cream (for example, milk-based and/or tasting of whipped cream) to a food product substantially similar to the praline sold by the companies of the Ferrero group under the commercial name "Rocher".

The application of garnishes constituted by rosettes of cream is common in the preparation of confectionery products. In confectionery laboratories, the rosette or rosettes of garnish are usually applied manually with the aid of a tool known as a "piping nozzle".

This solution is difficult to apply to the mass production of food products, and in particular confectionery products.

At least in principle, the problem of applying rosettes of cream to mass-produced products can be overcome by the use of automatic measuring/delivery machines. However, unlike the hand-made confectionery product which is usually intended to be marketed and consumed soon after production, the mass-produced product is intended to be packaged so as to ensure that it remains undamaged both in storage and during transport. This is both during its transfer to the place of sale as well as after the product has been acquired by the ultimate consumer and taken to the place of consumption. A garnish such as a rosette of cream does not appear very compatible with such treatment, and this is easily seen to be true of hand-made products as well; it is, in fact, very easy for the rosettes of garnish to be at least partly damaged (usually crushed) while being transported from the place of acquisition to the place of consumption, often with an undesirable smearing of the packaging which is most frequently a cardboard container covered with a sheet of paper.

DE 2 002 963 A describes a process for manufacturing a decorated cake having on its surface a garnish according to the pre-characterizing part of Claim 1. GB 2 196 828 A and EP 0 712 579 A describe composite confectionery products having, on their top, disk-like protective elements.

The object of the present invention is to overcome the aforesaid problems by enabling rosette garnishes to be applied to mass-produced food products while also ensuring that the garnishing is protected against damages until the product is consumed.

According to the present invention, this object is achieved by virtue of a method having the characteristics referred to in Claim 1.

The invention will now be described, purely by way of non-limitative example, with reference to the accompanying drawings, in which:
- Figure 1 shows a possible embodiment of a garnished food product produced according to the invention; and
- Figures 2 to 7 illustrate successive stages in the method of producing the product of Figure 1.

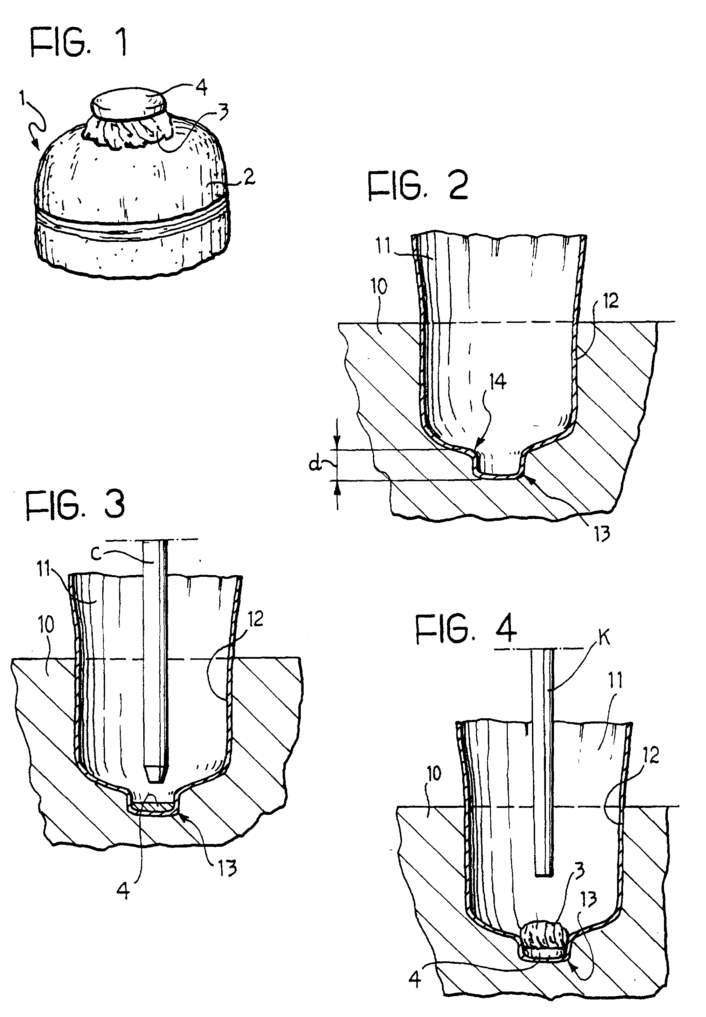

In Figure 1, the reference numeral 1 generally indicates a food product, specifically a confectionery product, including a body 2 essentially like a generally spherical praline having a flat base. Preferably, a coating (enrobing) of a substance such as chocolate, possibly containing granulated material (for example, chopped nuts) is applied to the outer surface of the body 2 of the product 1. Food products of this type, or substantially similar thereto, are known, as has already been indicated in the introduction to the present description.

The product 1 illustrated in Figure 1 is characterised by the presence on the top part of the body 2 of a garnish constituted by a rosette of creamy material 3 (for example, a cream which is milk-based and/or which tastes of whipped cream) applied to the "polar" part of the body 2 itself and surmounted by a disc-like element 4 constituted, for example, by a disc of a material such as chocolate.

In the drawings following Figure 1, the reference numeral 10 indicates a mould used to produce the product 1 of Figure 1.

In the embodiment illustrated here, the mould 10 is used (according to criteria described more fully below) simultaneously to make the product 1 and to insert it in a wrapper 11 of sheet material. It is, however, clear that the mould 10 may be used to make the product 1 without necessarily wrapping it at the same time. Naturally, the combination of the two operations constitutes a preferred embodiment of the invention.

Even though the embodiment illustrated here concerns the application of the garnish 3, 4 to the top of a generally spherical body 2, it is clear that the invention lends itself to the application of a garnish of this type (with the disc-like element 4) to any kind of product, for example, a substantially flat product. For example, the invention enables a row of garnishes 3, 4 of the type illustrated here to be applied to the upper surface of a generally flat product such as, for example, a slab of chocolate. The possible variants on the embodiment explained in detail below are obvious to an expert in the field and will not therefore be explained in detail here, especially since they are not relevant to an understanding of the invention.

In the embodiment illustrated, the mould 10 is characterised by the presence of a generally cup-shaped mould cavity 12 which is generally circular in horizontal section. This section corresponds to the generally spherical shape of the body 2 referred to here: it is, however, clear that the shape and the section of the cavity 12 can be quite different in the case of different shaped products.

The mould cavity 12 has, in its basal region (which region, as will be seen, is intended to correspond with the top region of the body 2 to which the garnish 3, 4 is applied), an appendix-like extension 13 which can be described generally as "teat-like".

In other words, the region 13 defines an extension in the basal region with respect to the general development of the mould cavity 12, which projects into the body of the mould 10 by a distance d (see Figure 2 in particular) from the general development of the base of the cavity 12. This means that, with respect to the adjacent parts of the mould cavity 12, the aforesaid extension 13 is bordered and bounded by a kind of abutment or shoulder 14 of generally annular shape.

In the embodiment illustrated here, in a first stage of the method for producing the product 1, the mould cavity 12 is used as a cavity for shaping the sheet wrapper material 11 (for example, a sheet of aluminium foil) into a cup-like shape which complements exactly the shape of the mould cavity 12, including its appendix-like extension 13.

Figure 2 shows the sheet of wrapper material 11 after it has been shaped and inserted in the cavity 12. This is achieved according to criteria widely known to the expert in the field, which criteria do not require explicit explanation here. For this purpose, reference can be made, for example, to EP-A-0 082 952, EP-A-0 591 742 or EP-A-0 680 701.

In a subsequent stage, the disc-like element 4 is deposited in the appendix-like extension 13 (see Figure 3 in particular). This operation may be performed in at least two different ways, namely:
- pre-forming the disc-like element 4 and then depositing it in that part of the wrapper 11 located in the extension 13 or, as is currently preferred,
- forming the disc-like structure 4 by casting, for example, chocolate or another food product in the aforesaid part of the wrapper using an associated metering nozzle C of known type, preferably by subsequently cooling at least the respective part of the wrapper.

It should again be noted that the presence of the sheet-like wrapper material 11, although preferred so as to enable the product to be formed at the same time as it is inserted in its wrapper, is not essential. Consequently, if the wrapper material 11 is not present, the disc-like element 4 is deposited or cast directly in the appendix-like part 13 of the mould cavity 12.

In a subsequent stage of the method, illustrated in Figure 4, the rosette of garnish 3 is deposited on the disc-like element 4. When, as is preferred, a rosette of creamy material is used, the deposition is preferably effected by a further metering nozzle K of known type. This method is preferred in that it enables the garnish 3 to be positioned very precisely while at the same time enabling equal precision in the measurement of the quantity of the food substance constituting the garnish.

Before, or at the same time as, the aforesaid stages, as illustrated in Figures 2 to 4, the body 2 is prepared (also according to known criteria: see, for example, EP-A-0 054 229, EP-A-0 083 324, EP-A-0 266 317, EP-A-0 583 739 or EP-A-0 610 840) by the formation (preferably but not necessarily) of a more or less deep cavity or recess 5 in the upper portion where the garnish 3, 4 is to be applied.

The body 2 is then inserted in the mould cavity 12 (in which, in the embodiment illustrated here, the wrapper sheet 11 is located) by advancing it into the cavity 12 itself, so-to-speak, "head first". This means that the top of the body 2, where the recess 5 is preferably formed, comes into contact with the bottom of the cavity 12 in correspondence with the shoulder 14, in practice, bearing against the shoulder 14 itself. In this way, the top of the body 2 is located in correspondence with the appendix-like extension 13 in which the garnish has already been formed.

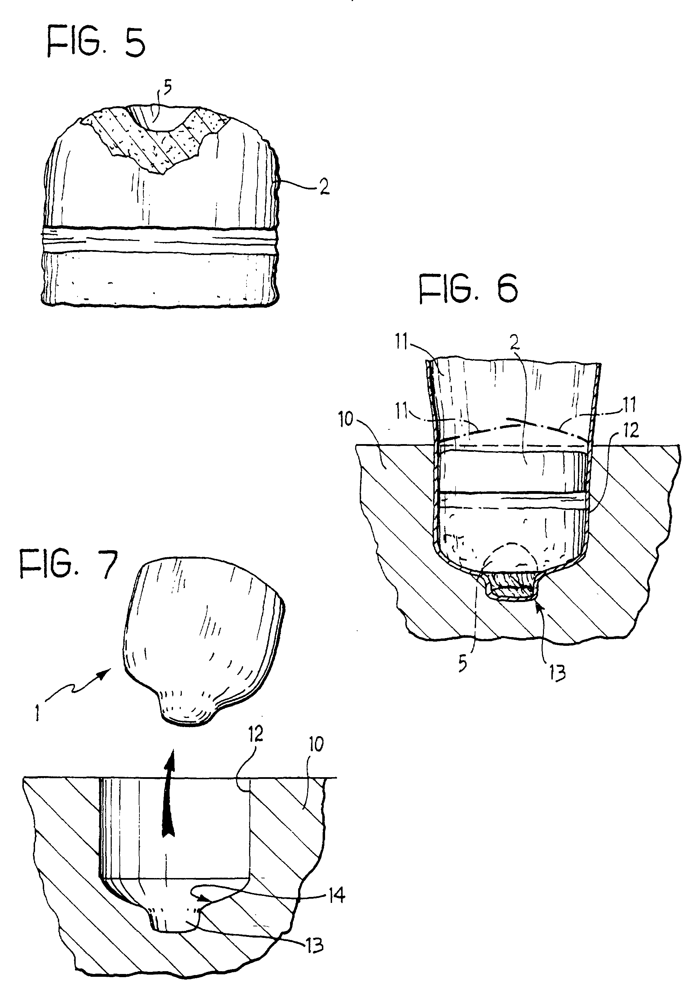

At this point, the formation of the product 1, having the characteristics illustrated in Figure 1, is now complete. The wrapper 11 - if present - can then be closed (in various ways) around the flat base part of the praline 12, as illustrated schematically in broken outline in Figure 6, thereby completing the wrapping of the product 1 which is then ready to be removed/expelled from the mould 10, as illustrated in Figure 7.

Naturally, when the wrapper material 11 is not present, once the product 1 has been prepared, it is removed from the cavity 12 to be inserted in a wrapper or package.

It will therefore be appreciated that the solution illustrated here is advantageous in that, since the product 1 is formed within the wrapper 11, packaging occurs at the same time as the preparation of the product, and the removal of the product (packaged in the wrapper 11) from the mould cavity 12 is significantly simplified.

In particular, the disc-like element 4 constitutes a form of protection (a kind of shield) which extends over the creamy or paste-like soft part of the garnish 3, protecting it against possible squashing or deformation and, in particular, preventing the garnish 3 from coming into contact with other parts of the packaging and spreading over them, with the consequent risk of soiling.

The protection of the garnish 3, 4 is even more marked by the presence of the corresponding part of the wrapper over the upper region (at the bottom in the accompanying drawings, as this is the preferred orientation during production), this wrapper forming a projecting, protective cap or cover, which can be likened to the top of a dome arising above the top of the wrapper and the product.

The distance d (Figure 2) between the shoulder 14 and the end portion of the cavity 12 can be adapted to the intended dimensions of the garnish 3, 4. Therefore, if the garnish 3, 4 is of limited dimensions, the distance d is correspondingly small. If, instead, a markedly projecting garnish 3, 4 is desired, the distance d is correspondingly large. The dimensions and, in particular, the depth of the recess 5, thus enable the overall dimensions, and hence, the quantity of substance forming the garnish to be determined and, in particular the part 3 thereof, in a way correlated with the choice of the distance d.

Naturally, the principle of the invention remaining the same, the details of production and the embodiments may be widely varied with respect to that described and illustrated, without thereby departing from the ambit of the present invention. This applies particularly to the possibility, as indicated in the introduction to the description, of applying garnishes such as the garnish 3, 4 to the surface of a generally flat product.

## Claims

1. A method for manufacturing a garnished food product (1), the product including a body (2) and at least one garnish (3, 4) projecting from a given position on said body, comprising the steps of:
a) providing a mould (10) with a mould cavity (12) having a teat-shaped, appendix-like extension (13) in a position corresponding in a complementary manner to the given position;
b) disposing the garnish (3, 4) in the appendix-like extension (13) of the cavity (12) of the mould (10); and
c) applying the body (2) of the product to the garnish (3, 4) in the cavity (12) of the mould (10) to cause the application of the garnish (3, 4) to the body (2) of the product (1), **characterized in that** said garnish comprises a creamy or paste-like soft part (3) and a disc-like protecting element (4) extending over said soft part and wherein in step b) the substance constituting said soft part (3) is delivered on top of the disc-like element (4) previously deposited or cast in the appendix-like extension (13) of the cavity (12) of the mould (10).

2. A method according to claim 1, **characterized in that** said soft part of the garnish is in the form of a rosette (3) of creamy or paste-like material.

3. A method according to claims 1 or 2, **characterized in that** it includes the step of forming the disc-like element (4) with a food product.

4. A method according to any one of Claims 1 to 3, **characterised in that** it includes the step of forming the body (2) of the product (1) with at least one recess (5) in correspondence with the given position for receiving at least part of the garnish (3, 4).

5. A method according to any one of Claims 1 to 4, **characterised in that** it includes the steps of:
- shaping the cavity (12) in the mould (10) with a shoulder part (14) surrounding the appendix-like extension; and
- applying the body (2) of the product (1) to the garnish (3, 4) disposed in the cavity (12) of the mould (10) by bringing the body (2) into contact with the shoulder part (14).

6. A method according to any one of Claims 1 to 5, **characterised in that** it includes the step of introducing a sheet-like wrapper (11) into the cavity (12) of the mould (10), which material adheres at least partly to the wall of the cavity (12) of the mould (10), and then introducing the garnish (3, 4) and the body (2) of the product (1) into the sheet-like wrapper (11) located within the cavity (12) of the mould (10).

7. A method according to Claim 6, **characterised in that** it includes the step of folding the sheet-like wrapper (11) around the product (1) formed in the cavity (12) of the mould (10).

## Patentansprüche

1. Verfahren zur Herstellung eines garnierten Nahrungsproduktes (1), wobei das Produkt einen Körper (2) und mindestens eine Garnierung (3, 4) einschließt, die von einer gegebenen Position auf dem Körper hervorsteht, die Schritte aufweisend:
a) Bereitstellen einer Form (10) mit einem Formhohlraum (12), der eine zitzenförmige, anhangartige Erweiterung (13) in einer Position entsprechend in komplementärer Weise zu der gegebenen Position besitzt;
b) Anordnen der Garnierung (3, 4) in der anhangartigen Erweiterung (13) des Hohlraums (12) der Form (10); und
c) Aufbringen des Körpers (12) des Produktes auf die Garnierung (3, 4) in dem Hohlraum (12) der Form (10), um das Aufbringen der Garnierung (3, 4) auf den Körper (2) des Produktes (1) zu veranlassen,
**dadurch gekennzeichnet, dass**
die Garnierung einen cremigen oder pastenartigen Teil (3) und ein scheibenartiges Schutzelement (4), das sich über den weichen Teil erstreckt, besitzt, und worin in Schritt b) die den weichen Teil (3) bildende Substanz auf die Oberseite des scheibenartigen Elements (4) zugeführt wird, das zuvor in der anhangartigen Erweiterung (13) des Hohlraumes (12) der Form (10) abgelegt oder eingebracht wurde.

2. Verfahren nach Anspruch 1, **dadurch gekennzeichnet, dass** der weiche Teil der Garnierung in der Form einer Rosette (3) aus cremigem oder pastenartigem Material ist.

3. Verfahren nach Anspruch 1 oder 2, **dadurch gekennzeichnet, dass** es den Schritt des Bildens des scheibenförmigen Elements (4) mit einem Nahrungsprodukt einschließt.

4. Verfahren nach einem der Ansprüche 1 bis 3, **dadurch gekennzeichnet, dass** es den Schritt des Bildens des Körpers (2) des Produkts (1) mit mindestens einer Vertiefung (5) in Übereinstimmung mit der gegebenen Position zur Aufnahme des wenigstens Teils der Garnierung (3, 4) einschließt.

5. Verfahren nach einem der Ansprüche 1 bis 4, **dadurch gekennzeichnet, dass** es die Schritte einschließt:
- Formen des Hohlraums (12) in der Form (10) mit einem Schulterteil (14), welcher die anhangartige Erweiterung umgibt; und
- Aufbringen des Körpers (2) des Produkts (1) auf die Garnierung (3, 4), die in dem Hohlraum (12) der Form (10) angeordnet ist, durch Inkontaktbringen des Körpers (2) mit dem Schulterteil (14).

6. Verfahren nach einem Ansprüche 1 bis 5, **dadurch gekennzeichnet, dass** es den Schritt des Einführens einer blattartigen Hülle (11) in den Hohlraum (12) der Form (10) einschließt, welches Material mindestens teilweise an der Wand des Hohlraums (12) der Form (10) anliegt, und dann Einführen der Garnierung (3, 4) und des Körpers (2) des Produkts (1) in die blattartige Hülle (11), die in dem Hohlraum (12) der Form (10) angeordnet ist.

7. Verfahren nach Anspruch 6, **dadurch gekennzeichnet, dass** es den Schritt des Faltens der blattartigen Hülle (11) um das in dem Hohlraum (12) der Form (10) gebildete Produkt (1) einschließt.

## Revendications

1. Procédé de fabrication d'un produit alimentaire garni (1), le produit comprenant un corps (2) et au moins une garniture (3, 4) en saillie depuis une position donnée sur ledit corps, comprenant les phases consistant à :
a) doter un moule (10) d'une cavité de moule (12) comportant une extension du type appendice, en forme de téton, (13) dans une position correspondant de manière complémentaire à la position donnée ;
b) disposer la garniture (3, 4) dans l'extension du type appendice (13) de la cavité (12) du moule (10) ; et
c) appliquer le corps (2) du produit sur la garniture (3, 4) dans la cavité (12) du moule (10) pour que la garniture (3, 4) soit appliquée sur le corps (2) du produit (1), **caractérisé en ce que** ladite garniture comprend une partie molle crémeuse ou pâteuse (3) et un élément protecteur en forme de disque (4) s'étendant sur ladite partie molle et dans lequel à la phase b) la substance constituant ladite partie molle (3) est distribuée sur le dessus de l'élément en forme de disque (4) auparavant déposé ou coulé dans l'extension du type appendice (13) de la cavité (12) du moule (10).

2. Procédé selon la revendication 1, **caractérisé en ce que** ladite partie molle de la garniture se présente sous la forme d'une rosace (3) de matière crémeuse ou pâteuse.

3. Procédé selon la revendication 1 ou 2, **caractérisé en ce qu'**il comprend la phase de formation de l'élément en forme de disque (4) avec un produit alimentaire.

4. Procédé selon l'une quelconque des revendications 1 à 3, **caractérisé en ce qu'**il comprend la phase de formation du corps (2) du produit (1) avec au moins un évidement (5) en correspondance de la position donnée pour recevoir au moins une partie de la garniture (3, 4).

5. Procédé selon l'une quelconque des revendications 1 à 4, **caractérisé en ce qu'**il comprend les phases consistant à :
- façonner la cavité (12) dans le moule (10) de manière qu'elle comporte une partie formant épaulement (14) entourant l'extension du type appendice ; et
- appliquer le corps (2) du produit (1) sur la garniture (3, 4) disposée dans la cavité (12) du moule (10) en amenant le corps (2) en contact avec la partie formant épaulement (14).

6. Procédé selon l'une quelconque des revendications 1 à 5, **caractérisé en ce qu'**il comprend la phase consistant à introduire un emballage du type feuille (11) dans la cavité (12) du moule (10), lequel matériau adhère au moins en partie à la paroi de la cavité (12) du moule (10), puis introduire la garniture (3, 4) et le corps (2) du produit (1) dans l'emballage du type feuille (11) situé au sein de la cavité (12) du moule (10).

7. Procédé selon la revendication 6, **caractérisé en ce qu'**il comprend la phase consistant à plier l'emballage du type feuille (11) autour du produit (1) formé dans la cavité (12) du moule (10).
